# EUROPÄISCHE PATENTSCHRIFT

(11) **EP 2 233 388 B1**
(45) Veröffentlichungstag und Bekanntmachung des Hinweises auf die Patenterteilung: **02.08.2017**
(21) Anmeldenummer: 10001698.9
(22) Anmeldetag: 19.02.2010
(51) Int. Cl.: B60W 30/182

(54) **Verfahren zur Auswahl verschiedener Fahrmodi sowie Fahrzeug, insbesondere Motorrad mit einer Elektronik, die in verschiedene Fahrmodi umschaltbar ist**
Method for selecting different driving modes and vehicle, in particular motorcycle with an electronics system which can be switched to different driving modes
Procédé de sélection de divers modes de conduite ainsi que véhicule, notamment moto, doté d'un système électronique commutable en divers modes de conduite

(30) Priorität: 27.03.2009 DE 102009015415
(43) Veröffentlichungstag der Anmeldung: 29.09.2010
(73) Patentinhaber: Bayerische Motoren Werke Aktiengesellschaft, 80809 München (DE)
(72) Erfinder: Wagner, Hans-Albert, 81737 München (DE); Krimmer, Stefan, 85229 Markt Indersdorf (DE)

(56) Entgegenhaltungen:
- EP-A1- 2 033 882
- DE-A1-102004 020 420
- DE-A1-102007 011 054

## Beschreibung

Die vorliegende Erfindung betrifft ein Verfahren gemäß den Merkmalen des Patentanspruches 1 sowie ein Fahrzeug gemäß den Merkmalen des Patentanspruches 7.

Bei manchen modernen Motorrädern besteht die Möglichkeit, Grundeinstellungen bzw. Funktionen verschiedener Steuergeräte (z. B. ABS-, Traktionskontroll- bzw. Motor-Steuergerät etc.) entsprechend den momentanen Einsatzbedingungen (Straßenfahrt, Geländefahrt, Fahrt auf Rennstrecke etc.) bzw. entsprechend dem Fahrkönnen des Fahrers einzustellen. Bei modernen Motorrädern nimmt die Anzahl derartiger Steuergeräte bzw. elektronischer Subsysteme zu. Dementsprechend nimmt auch die Anzahl einstellbarer Betriebsparameter zu. Eine Einstellung bzw. Überprüfung der Einstellung der einzelnen Betriebsparameter kann daher sehr zeitaufwändig sein. Ferner besteht ganz grundsätzlich das Problem, dass manche Fahrer hinsichtlich ihres technischen Verständnisses überfordert sind, die für die jeweiligen Einsatzbedingungen richtigen Einstellungen auszuwählen und richtig einzustellen. Schwierig ist es vor allem den Überblick zu behalten, wie sich Interaktionen der einzelnen elektronischen Subsysteme letztlich auf das Gesamtverhalten des Motorrads auswirken. DE102004020420 offenbart ein Verfahren zum Wechsel von einer ersten, elektronisch gesteuerten Funktion eines Fahrzeugs, insbesondere eines Motorrads, in eine zweite, elektronisch gesteuerte Funktion, mit folgenden Schritten:
- Vorauswahl der zweiten Funktion durch Betätigung eines ersten Betätigungselements und
- Umschalten von der ersten in die vorausgewählte zweite Funktion durch Betätigen eines sich von dem ersten Betätigungselement unterscheidenden zweiten Betätigungselements.
Aufgabe der Erfindung ist es, ein Verfahren bzw. ein Fahrzeug zu schaffen, das eine Umschaltung zwischen verschiedenen Fahrmodi ermöglicht, wobei eine hohe Bediensicherheit und ein hoher Bedienkomfort gegeben sein sollte.

Diese Aufgabe wird durch die Merkmale der Patentansprüche 1 bzw. 7 gelöst. Vorteilhafte Ausgestaltungen und Weiterbildungen der Erfindung sind den Unteransprüchen zu entnehmen.

Ausgangspunkt der Erfindung ist es, für mindestens ein elektronisches Fahrzeugsystem, vorzugsweise aber für mehrere bzw. eine Gruppe elektronischer Fahrzeugsysteme verschiedene "voreinstellbare" Fahrmodi zu definieren. Die einzelnen Fahrmodi sind durch verschiedene "Sätze von Parametereinstellungen" vordefiniert.

Der Begriff "Parametereinstellungen" ist sowohl in der vorliegenden Beschreibung als auch in den Patentansprüchen äußerst breit zu interpretieren. Gemeint sein können ganz allgemein Einstellungen z.B. im Sinne bestimmter Zahlenwerte, Intervalle, Funktionszustände, Funktionscharakteristika wie z.B. Ansprechkurven etc. Bei den elektronischen Fahrzeugsystemen kann es sich beispielsweise handeln um
- ein Antiblockiersystem (ABS-System),
- ein Schlupf- bzw. Traktionskontrollsystem (so genanntes ASC- oder DTC-System),
- ein Fahrwerksteuer- bzw. Fahrwerkregelsystem,
- ein Leistungsbegrenzungssystem zur Begrenzung der Motorleistung eines Verbrennungsmotors des Fahrzeugs,
- ein System, welches die Ansprechcharakteristik des Verbrennungsmotors bei der Betätigung eines Gasdrehgriffs bzw. eines Gaspedals definiert,
- etc.

Für mindestens eines, vorzugsweise aber für mehrere derartige elektronische Fahrzeugsysteme werden so genannte "Fahrmodi" definiert, denen für einzelne oder alle der genannten elektronischen Systeme jeweils bestimmte Parametereinstellungen zugeordnet sind. Bei den Fahrmodi kann es sich beispielsweise um einen Fahrmodus "Rain" bzw. "Regenbetrieb", "Sport", "Race" bzw. "Rennbetrieb" oder "Slick" bzw. "Extrem Rennsport" handeln.

Der Kern der Erfindung besteht in einer einfachen und zugleich sicheren Auswahl einzelner Fahrmodi, wobei vorgesehen ist, dass durch Betätigen eines ersten Betätigungselements zunächst ein gewünschter Fahrmodus "vorausgewählt" wird und zum Umschalten vom ersten Fahrmodus in den vorausgewählten zweiten Fahrmodus, d. h. zum tatsächlichen Aktivieren des vorausgewählten Fahrmodus, ein zweites Betätigungselement zu betätigen ist.

Vorzugsweise sind die beiden Betätigungselemente in einem Bereich angeordnet, der während der Fahrt problemlos vom Fahrer erreichbar ist. Sofern das Fahrzeug ein Motorrad ist, kann es sich bei dem ersten Betätigungselement beispielsweise um einen im Bereich des Gasdrehgriffs angeordneten "Taster" handeln und bei dem zweiten Betätigungselement z. B. um den Kupplungsbetätigungshebel, der üblicherweise im Bereich des linken Lenkergriffs angeordnet ist. Für einen Wechsel des Fahrmodus während der Fahrt ist somit aus Sicherheitsgründen eine sequentielle Betätigung zweier Betätigungselemente erforderlich, was die Gefahr eines unbeabsichtigten Wechsels des Fahrmodus weitgehend ausschließt.

Aus Sicherheitsgründen kann ferner vorgesehen sein, dass für eine Vorauswahl eines gewünschten Betätigungsmodus die Fahrzeugelektronik durch Betätigen des ersten Betätigungselements zunächst in einen Auswahlmodus geschaltet werden muss. So kann vorgesehen sein, dass durch einmaliges Betätigen des ersten Betätigungselements ein entsprechendes Auswahlmenü mit zwei oder mehreren Fahrmodi aufgerufen und in einer Anzeigeelektronik, z. B. in einem im Cockpit- bzw. Lenkerbereich des Fahrzeugs angeordneten Display, dargestellt wird.

Nach Aufrufen des Auswahlmenüs kann durch eine oder mehrere weitere Betätigungen des ersten Betätigungselements innerhalb des Auswahlmenüs von einem vorausgewählten Fahrmodus zu einem anderen vorausgewählten Fahrmodus "weitergesprungen" werden. Es kann vorgesehen sein, dass durch mehrmaliges Betätigen des ersten Betätigungselements zyklisch die einzelnen vorgehaltenen Fahrmodi in einer vorgegebenen Reihenfolge "durchgeklickt" werden können.

Ferner können weitere Bedingungen definiert sein, die für einen Wechsel des Fahrmodus erfüllt sein müssen. Beispielsweise kann vorgesehen sein, dass ein Umschalten von einem momentan aktiven Fahrmodus in einen vorausgewählten Fahrmodus nur dann erfolgt, wenn sich ein "Gasvorwahlelement" im Zeitpunkt der Betätigung des zweiten Betätigungselements in einem vorgegebenen Zustand bzw. in einem Grundzustand befindet. Anders ausgedrückt kann vorgesehen sein, dass ein tatsächlicher Wechsel des Fahrmodus beim Betätigen des zweiten Betätigungselements nur dann erfolgt, wenn bei einem Pkw das Gaspedal bzw. bei einem Motorrad der Gasdrehgriff unbetätigt ist, d. h. wenn der Fahrer nicht aktiv "Gas gibt".

Als weitere Umschaltbedingung kann vorgesehen sein, dass ein Wechsel des Fahrmodus bei einer Betätigung des zweiten Betätigungselements nur dann erfolgt, wenn das Fahrzeug nicht aktiv gebremst wird, d. h. wenn der Fahrer das Bremspedal bzw. den Bremshebel nicht betätigt.

Nach einer Weiterbildung der Erfindung kann vorgesehen sein, dass das Fahrzeug werksseitig mit drei verschiedenen Fahrmodi, z. B. "Regenbetrieb, Sportbetrieb, Rennbetrieb ausgeliefert wird, die standardmäßig über die beiden Betätigungselemente anwählbar sind und dass mindestens ein weiterer Fahrmodus, wie z. B. "Extremrennsportbetrieb", in das zur Verfügung stehende Vorauswahlmenü geladen werden können, in dem ein elektrisches bzw. elektronisches Codierelement mit einem im bzw. am Fahrzeug vorgesehenen elektrischen bzw. elektronischen "Verbindungselement" elektrisch verbunden wird.

Bei dem Codierelement kann es sich beispielsweise um einen schlüsselartigen Chip o. ä. handeln, der in eine Buchse o. ä. eingesteckt wird, die Teil der Fahrzeugelektronik ist. Das Verbindungselement bzw. die Buchse kann im Falle eines Motorrads z. B. im Bereich unterhalb der Sitzbank angeordnet sein. Durch eine derartige Maßnahme ist sichergestellt, dass ein unbeabsichtigter Wechsel in einen "Profifahrmodus", der hohe Anforderungen an das Fahrkönnen stellt, wirklich nur durch bewusstes, aktives Handeln erfolgt, keinesfalls aber unbeabsichtigt.

Zusätzlich zu den einzelnen Fahrmodi, welche für ein oder mehrere elektronische Subsysteme (z. B. ABS, ASC/DTC, Motorsteuerung etc.) bestimmte Einstellungen definieren, kann vorgesehen sein, dass einzelne elektronische Subsysteme, wie z. B. ABS oder ASC/DTC unabhängig vom aktuell eingestellten Fahrmodus manuell ab- und wieder zugeschaltet werden können. Beispielsweise kann im Falle eines Motorrads im Bereich des dem Gasdrehgriff gegenüberliegenden Lenkergriffs ein "Kipptaster" vorgesehen sein, durch dessen Betätigung in der einen Richtung das ABS-System ab- und wieder zugeschaltet werden kann und durch dessen Betätigung in der anderen Richtung das ASC-/DTC-System ab- bzw. wieder zugeschaltet werden kann, wobei vorgesehen sein kann, dass in einem Grundzustand beide Systeme standardmäßig eingeschaltet sind.

Alternativ können die Funktionen auch mit einem Taster aktiviert werden, wobei einzelnen Funktionen unterschiedliche Betätigungszeiten zugeordnet sein können.

Im Folgenden wird die Erfindung im Zusammenhang mit der Zeichnung näher erläutert. Es zeigen:
- Figur 1: ein Blockschaltbild, in dem schematisch einzelne elektronische Subsysteme eines Fahrzeugs dargestellt sind;
- Figur 2: eine Matrix, in der verschiedene Fahrmodi und die jeweiligen Einstellungen einzelner elektronischer Subsysteme dargestellt sind;
- Figuren 3-6: Displaydarstellungen, aus denen die einzelnen Schritte beim Umschalten von einem Fahrmodus in einen anderen Fahrmodus ersichtlich sind.

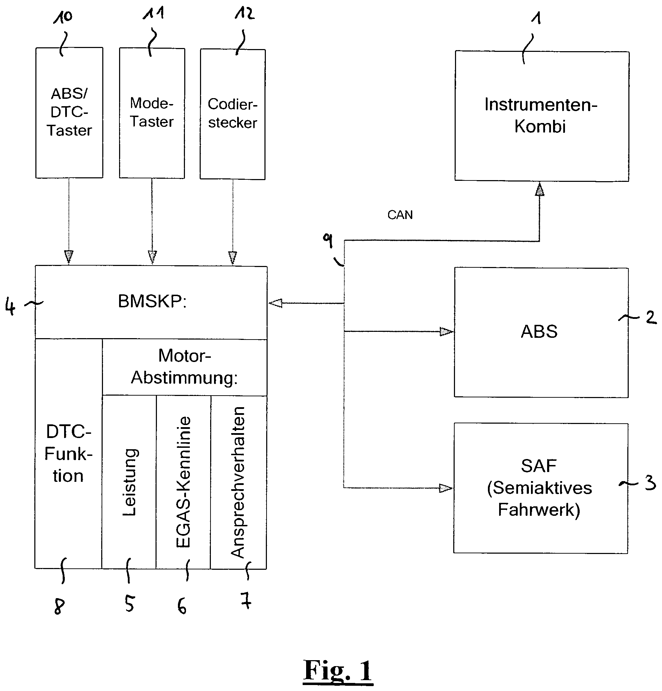

Figur 1 zeigt ein Blockschaltbild, in dem schematisch verschiedene elektronische Subsysteme einer Motorradelektronik dargestellt sind. Die Motorradelektronik umfasst eine Anzeigeeinrichtung 1, die hier als "Instrumentenkombi" bezeichnet ist. In der Anzeigeeinrichtung 1 werden dem Fahrer wichtige Zustandsinformationen angezeigt. Das Motorrad weist ferner ein elektronisches Antiblockiersystem (ABS) 2 sowie ein Subsystem 3 auf, welches ein elektronisch ansteuerbares Fahrwerk steuert bzw. regelt.

Das ABS-System soll einerseits ein Blockieren der Räder verhindern und andererseits bei einem erkannten Abheben des Hinterrads präventiv den Bremsdruck am Vorderrad reduzieren, um ein Überschlagen des Motorrads zu verhindern.

Darüber hinaus ist ein weiteres elektronisches System 4 vorgesehen, das im Folgenden vereinfachend als "Motorelektronik" bezeichnet wird. Die Motorelektronik 4 umfasst wiederum weitere Subsysteme. Zum einen ist ein Leistungsbegrenzungsmodul 5 vorgesehen, mittels dem die Leistung des Verbrennungsmotors beispielsweise entsprechend einer bestimmten Ländervariante auf eine vorgegebenen Leistung begrenzt werden kann.

Über ein weiteres Subsystem 6, das hier als "EGAS-Kennlinie" bezeichnet wird, wird die "Kennlinie" definiert, mit der eine Betätigung des Gasdrehgriffs in Motorleistung umgesetzt wird. Beispielsweise kann die Kennlinie in Form einer mathematischen Funktion definiert sein, welche den Stellwinkel der Drosselklappe des Verbrennungsmotors in Abhängigkeit des Drehwinkels des vom Fahrer zu betätigenden Gasdrehgriffs beschreibt.

Ein weiteres Subsystem 7, das hier mit dem Begriff "Ansprechverhalten" bezeichnet ist, legt den "Lastschlag" bzw. die "Lastschlagdämpfung" fest, d. h. den zeitlichen Verlauf des Drehmomentanstiegs bzw. des Drehmomentabfalls, der bei einer schnellen Betätigung des Gasdrehgriffs zu spüren ist. So kann beispielsweise vorgesehen sein, dass ein schlagartiges Gas geben bzw. ein schlagartiges Gas zurücknehmen gedämpft wird, um den am Hinterrad auftretenden "Drehmomentstoß" abzumildern.

Ein weiteres Subsystem der Motorelektronik 4 ist hier mit dem Begriff "DTC-Funktion" 8 bezeichnet. Bei diesem System, das in der vorliegenden Anmeldung an manchen Stellen auch als ASC-System bezeichnet wird, handelt es sich um ein Schlupf- bzw. Traktionskontrollsystem, das im aktivierten Zustand einerseits ein Abheben des Vorderrads bei starker Beschleunigung verhindern soll und andererseits ein Durchdrehen des Hinterrads bei starkem Beschleunigen verhindern bzw. begrenzen soll.

Wie aus Figur 1 ersichtlich ist, sind die Anzeigeeinrichtung 1, das ABS-System 2, die aktive Fahrwerksteuerung 3 sowie die Motorelektronik 4 mit ihren Subsystemen 7 - 8 über einen Datenbus 9, der bei dem hier gezeigten Ausführungsbeispiel ein CAN-Bus ist, elektronisch miteinander gekoppelt.

Zusätzlich zu den einzelnen Subsystemen weist die Bordelektronik ferner zwei Geberelemente 10, 11 sowie einen so genannten "Codierstecker" 12 auf. Bei dem Geberelement 10 kann es sich beispielsweise um einen von Hand zu betätigenden Doppelkipptaster handeln. Durch Betätigen des Tasters in die eine Richtung kann das ABS-System 2 ab- und durch erneutes Tippen in die eine Richtung wieder zugeschaltet werden. Durch Tippen des Tasters 10 in die andere Richtung kann das Schlupf- bzw. Traktionskontrollsystem 8 ab- und durch erneutes Tippen in die andere Richtung wieder zugeschaltet werden.

Der Codierstecker 12, bei dem es sich ganz allgemein um einen "Schlüssel" handelt, z.B. in der Form eines Elektronikchips, kann in einen hier nicht dargestellten "Slot" eingesetzt bzw. eingeschoben werden, der z. B. in einem Bereich unterhalb der Sitzbank des Motorrads angeordnet sein kann. Die Aufgabe und Funktionsweise des Codiersteckers wird später noch näher erläutert.

Die beiden Taster 10, 11 und der Codierstecker 12 werden direkt von der Motorelektronik 4 über je eine separate elektrische Leitung eingelesen. Die Interpretation der Taster-Stati und des Codiersteckerstatus erfolgt von der Motorelektronik 4. Dort werden auch Umschaltvorgänge zwischen einzelnen Fahrmodi koordiniert, was später noch näher erläutert wird.

Vergegenwärtigt man sich die Vielzahl der elektronischen Subsysteme einer modernen Motorradbordelektronik, so leuchtet es ein, dass es keine "Optimaleinstellung" bzw. "Optimalparametrisierung" der einzelnen Subsysteme geben kann, die für alle Einsatzbedingungen geeignet ist und dem Fahrkönnen aller Fahrer entspricht.

Bei manchen herkömmlichen Motorrädern können daher bestimmte Grundeinstellungen elektronischer Fahrzeugsysteme entsprechend dem Fahrkönnen des jeweiligen Fahrers sowie entsprechend den aktuellen Einsatzbedingungen eingestellt werden. Bei einem Motorrad mit sehr vielen elektronischen Subsystemen würde dies wiederum ein hohes technisches Verständnis des Fahrers voraussetzen. Selbst bei einem guten technischen Verständnis bliebe es schwierig, den Überblick über die Vielzahl der möglichen Einstellparameter und die sich hieraus ergebenden Auswirkungen auf das Fahrverhalten des Motorrads zu behalten.

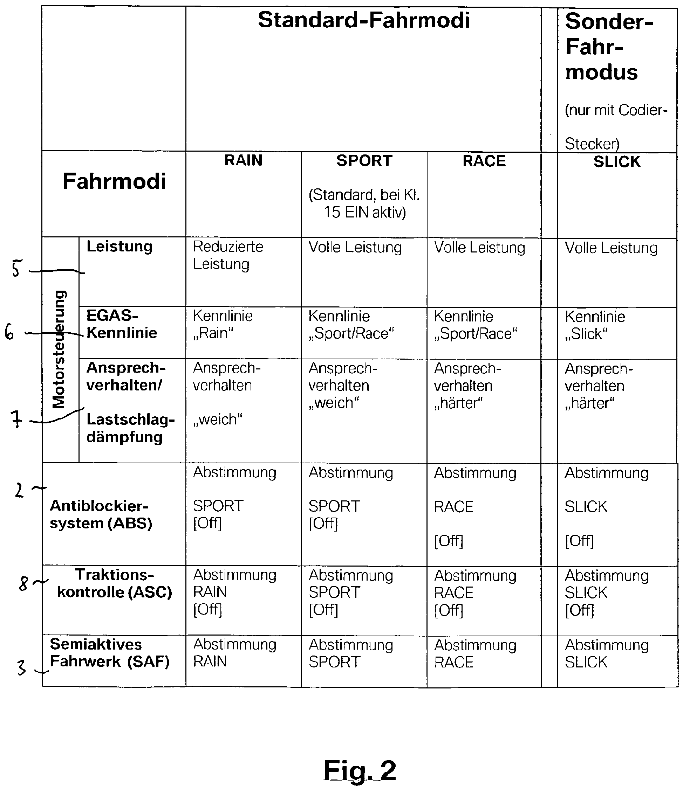

Um dem zu begegnen, werden in der Motorradelektronik verschiedene Fahrmodi definiert, was im Zusammenhang mit der in Figur 2 dargestellten Matrix näher erläutert wird.

Bei dem in Figur 2 gezeigten Ausführungsbeispiel sind drei Standardfahrmodi vorgesehen, die hier als "Rain", "Sport" und "Race" bezeichnet sind. Hinter jedem dieser drei Standardfahrmodi verbergen sich Sätze von Parametereinstellungen für die diversen elektronischen Subsysteme der Motorelektronik, d. h. für das Leistungsbegrenzungssystem 5, das System 6, welches die Gasdrehgriffkennlinie definiert, das System 7, welches die Lastschlagdämpfung steuert bzw. regelt, das Antiblockiersystem 2, das Schlupf- bzw. Traktionskontrollsystem 8, sowie das Kontrollsystem 3 zur Steuerung bzw. Regelung eines semiaktiven Fahrwerks.

Der für Fahrten bei regennasser Fahrbahn vorgesehene Fahrmodus "Rain" sieht z.B. folgende Grundeinstellung vor:
- Reduzierte Motorleistung,
- eine "weiche" Gasdrehgriffcharakteristik,
- eine weiche Lastschlagdämpfung, um die Gefahr des Ausbrechens des Hinterrads zu minimieren,
- eine Parametrisierung des ABS-Systems auf einen hier nicht näher zu erläuternden Zustand "Sport",
- eine sowie nassen Bedingungen angepasste Einstellung des Schlupf- bzw. Traktionskontrollsystems 8 und des semiaktiven Fahrwerks 3.

Bei dem hier gezeigten Ausführungsbeispiel ist vorgesehen, dass der Fahrmodus "Sport" standardmäßig nach dem Einschalten der Zündung eingestellt ist. Bei den Fahrmodi "Sport" und "Race" wird jeweils die volle Motorleistung angeboten. Ferner ist bei diesen beiden Fahrmodi eine "aggressivere" Gasdrehgriffkennlinie eingestellt. Die Lastschlagdämpfung beim Fahrmodus Sport ist dieselbe wie beim Fahrmodus Rain und "weicher" als beim Fahrmodus "Race".

Die drei Fahrmodi Rain, Sport und Race stehen grundsätzlich immer zur freien Auswahl zur Verfügung. Für Profifahrer, die das Motorrad unter Extrembedingungen, insbesondere unter extremen Rennbedingungen betreiben wollen, kann zusätzlich ein Sonderfahrmodus, der hier mit dem Begriff "Slick" bezeichnet ist, in das Auswahlmenü "geladen" werden.

Zum Freischalten des Sonderfahrmodus "Slick" muss der oben erwähnte Codierstecker in einen zugeordneten Slot eingesetzt, d.h. an die Bordelektronik angeschlossen werden. Nur wenn der Codierstecker elektrisch bzw. elektronisch mit der Bordelektronik des Motorrads verbunden ist, steht der Sonderfahrmodus "Slick" zur Auswahl zur Verfügung. Der Sonderfahrmodus Slick zeichnet sich bei dem in Figur 2 dargestellten Ausführungsbeispiel insbesondere durch die Merkmale
- volle Motorleistung,
- besonders aggressive Gasdrehgriffkennlinie,
- geringe Lastschlagdämpfung, d. h. hartes Ansprechverhalten, sowie
- spezielle, für extreme Einsatzbedingungen definierte Einstellungen des ABS-Systems, des Schlupf- bzw. Traktionskontrollsystems und des semiaktiven Fahrwerks.

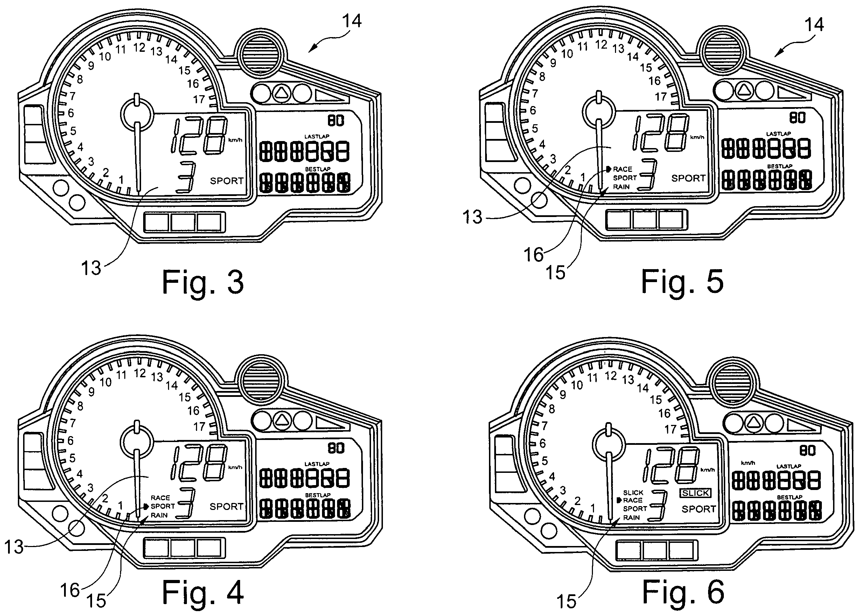

Die Figuren 3 - 6 beschreiben das Anzeige- und Bedienkonzept zum Umschalten zwischen einzelnen Fahrmodi. In einem Display 13 eines so genannten "Instrumentenkombi" 14, das vorderhalb des Lenkers des Motorrads angeordnet ist, wird neben der aktuellen Geschwindigkeit und dem eingelegten Gang der momentan aktive Fahrmodus "Sport" angezeigt.

Durch Betätigen des so genannten Mode-Tasters 11 (vgl. Figur 1), der im Bereich des rechten Lenkergriffs, d. h. im Bereich des Gasdrehgriffs angeordnet sein kann, wird ein Auswahlmenü 15 aufgerufen und im Display 13 des Instrumentenkombis 14 angezeigt. Das Auswahlmenü 15 listet die drei standardmäßig zur Verfügung stehenden Fahrmodi auf, d. h. außer dem aktuell eingestellten Fahrmodus "Sport" auch die beiden anderen Standardfahrmodi "Race" und "Rain".

Der aktuell eingestellte Fahrmodus "Sport" ist, wie bereits in Figur 3 dargestellt, in etwas größerer Schrift dargestellt und im Auswahlmenü 15 zusätzlich durch ein Pfeilsymbol gekennzeichnet.

Durch erneutes Drücken des in Figur 1 schematisch gezeigten Mode-Tasters 11 können im Auswahlmenü 15 die einzelnen Fahrmodi zyklisch durchgeklickt werden, ohne dass sich an der Einstellung des aktuellen Fahrmodus etwas ändert. Durch einmaliges weiteres Drücken des Mode-Tasters 11 kann beispielsweise von dem in Figur 4 gezeigten Auswahlzustand in den Figur 5 gezeigten Auswahlzustand umgeschaltet werden, in dem der Fahrmodus "Race" für eine tatsächliche Auswahl zur Verfügung steht, was daran ersichtlich ist, dass das Pfeilsymbol 16 neben dem Begriff "Race" erscheint.

Um die Fahrzeugelektronik bzw. die einzelnen in Figur 1 dargestellten elektronischen Subsysteme in den "Race-Modus" umzuschalten, müssen zunächst die Bedingungen erfüllt sein,
1. dass kein Gas gegeben wird, d. h. dass sich der Gasdrehgriff in Leerlaufstellung befindet und
2. dass das Fahrzeug nicht aktiv über das Bremssystem gebremst wird.

Sind diese beiden Bedingungen erfüllt, so kann der Fahrer in den vorausgewählten Fahrmodus "Race" umschalten, indem er über ein weiteres Betätigungselement ein Bestätigungssignal erteilt. Beispielsweise kann vorgesehen sein, dass ein Umschalten durch kurzes Betätigen des im Bereich des linken Lenkergriffs angeordneten Kupplungshebels erfolgt.

Wenn das Auswahlmenü 15, wie z. B. in den Figuren 4 und 5 gezeigt, aktiv ist und innerhalb einer vorgegebenen Zeitspanne keine weitere Betätigung des Mode-Tasters 11 (Figur 1) bzw. kein Umschaltvorgang in einem anderen Fahrmodus erfolgt, wird das Ausfallmenü 15 wieder automatisch ausgeblendet, d. h. es werden lediglich die Grundanzeigen dargestellt, nämlich die Geschwindigkeit, der aktuell eingelegte Gang und der aktuell aktive Fahrmodus (Figur 3).

Der Umschaltvorgang der einzelnen Funktionen (Motorkennlinien, ASC/DTC, ABS, semiaktives Fahrwerk) ist nur in bestimmten Betriebszuständen möglich. Beispielsweise kann vorgesehen sein, dass eine Umschaltung der Motorkennlinien nur in Schubphasen des Fahrzeugs erfolgt. Aus diesem Grund wird eine Umschaltung zwischen einzelnen Fahrmodi zunächst über das Auswahlmenü 15 vorgewählt. Die Umschaltung aller Funktionen bzw. elektronischer Subsysteme erfolgt grundsätzlich zeitgleich. Sobald alle Systeme zur Umschaltung bereit sind, werden gleichzeitig alle Funktionen in den vorausgewählten neuen Fahrmodus umgeschaltet. Erst wenn alle elektronischen Subsysteme in den ausgewählten Fahrmodus umgeschaltet sind, wird dies im Instrumentenkombi durch den in Figur 3 gezeigten Normalzustand angezeigt.

Wie oben bereits erwähnt, kann die Anzahl der zur Verfügung stehenden Fahrmodi um einen weiteren Fahrmodus "Slick" erweitert werden, in dem an die Bordelektronik ein Codierelement bzw. ein Codierstecker 12 (vgl. Figur 1) angeschlossen wird. Nach Einstecken des Codiersteckers 12 ist der Slick-Modus sofort aktiv. Durch Betätigen des Mode-Tasters 11 können nun im Auswahlmenü 15 vier Fahrmodi ausgewählt werden. Der aktive Fahrmodus sowie der Status "ABS deaktiviert" bzw. "ASC deaktiviert" werden von den entsprechenden Steuergeräten gespeichert und werden auch nach Ausschalten und erneutem Einschalten der Zündung beibehalten.

Wie bereits erwähnt, kann die ABS- und/oder die ASC-/DTC-Funktion in jedem Fahrmodus deaktiviert werden. Der aktuelle ABS- bzw. ASC-/DTC-Status kann durch separate Kontrollleuchten (nicht dargestellt) z. B. im Instrumentenkombi 14 angezeigt werden.

Im Unterschied zum Slick-Modus kann der ABS- bzw. ASC-/DTC-Status im normalen Standardbetrieb, d. h. wenn der Codierstecker nicht eingesteckt ist, bei jedem aus- und erneutem Einschalten der Zündung auf aktiv zurückgesetzt werden. Das heißt, das ABS- bzw. das ASC-/DTC-System ist standardmäßig beim Einschalten der Zündung eingeschaltet. Im Sondermodus (mit Codierstecker) wird der Zustand des ABS-Systems und des ASC-Systems von den betreffenden Steuergeräten gespeichert und wird beim Aus- und erneutem Einschalten der Zündung unverändert beibehalten.

Es kann vorgesehen sein, dass bei stehendem Fahrzeug eine Fahrmodusumschaltung nach einer vorgegebenen Zeit nach der entsprechenden Auswahl durch den Fahrer erfolgt und zwar unabhängig davon, ob das Bremssystem, der Gasdrehgriff oder die Kupplung betätigt wird.

Während der Fahrt hingegen kann aus Sicherheitsgründen vorgesehen sein, dass ein Umschalten nur dann erfolgt, wenn das Bremssystem unbetätigt ist, der Gasdrehgriff sich in Leerlaufstellung befindet, d. h. kein Antriebsdrehmoment am Hinterrad angefordert wird und der Kupplungshebel zumindest kurzzeitig vollständig gezogen wird.

## Patentansprüche

1. Verfahren zum Wechsel von einem ersten, elektronisch gesteuerten Fahrmodus eines Fahrzeugs, insbesondere eines Motorrads, in einen zweiten, elektronisch gesteuerten Fahrmodus, mit folgenden Schritten:
- Vorauswahl des zweiten Fahrmodus durch Betätigung eines ersten Betätigungselements (11) und
- Umschalten von dem ersten in den vorausgewählten zweiten Fahrmodus durch Betätigen eines sich von dem ersten Betätigungselement (11) unterscheidenden zweiten Betätigungselements.

2. Verfahren nach Anspruch 1, **dadurch gekennzeichnet, dass** durch Betätigen des ersten Betätigungselements (11) eine Anzeigeelektronik (14) in ein Auswahlmenü (15) geschaltet wird.

3. Verfahren nach Anspruch 2, **dadurch gekennzeichnet, dass** durch eine oder mehrere weitere Betätigungen des ersten Betätigungselements (11) innerhalb des Auswahlmenüs (15) vorhandene Fahrmodi zyklisch vorausgewählt werden können.

4. Verfahren nach einem der Ansprüche 1 bis 3, **dadurch gekennzeichnet, dass** ein Umschalten von einem momentan aktiven Fahrmodus in einen anderen Fahrmodus nur dann erfolgt, wenn sich ein Gasvorwahlelement im Zeitpunkt der Betätigung des zweiten Betätigungselements in einem unbetätigten Grundzustand befindet.

5. Verfahren nach einem der Ansprüche 1 bis 4, **dadurch gekennzeichnet, dass** ein Umschalten von einem momentan aktiven Fahrmodus in einen anderen Fahrmodus nur dann erfolgt, wenn das Fahrzeug nicht aktiv über ein Bremssystem des Fahrzeugs gebremst wird.

6. Verfahren nach einem der Ansprüche 1 bis 5, **dadurch gekennzeichnet, dass** die Anzahl der auswählbaren Modi um mindestens einen Profimodus erweiterbar ist, wobei zum Erweitern der Anzahl der auswählbaren Modi ein elektrisches bzw. elektronisches Codierelement (12) elektrisch mit einer am Fahrzeug vorgesehenen elektronischen Schnittstelle zu verbinden ist.

7. Fahrzeug, insbesondere Motorrad, mit einer Elektronik, die von einem ersten elektronisch gesteuerten Fahrmodus in einen zweiten elektronisch gesteuerten Fahrmodus umschaltbar ist, wobei für eine Vorauswahl des zweiten Fahrmodus ein erstes Betätigungselement (11) vorgesehen ist, **dadurch gekennzeichnet, dass** zum Umschalten der Elektronik vom ersten Fahrmodus in den zweiten Fahrmodus ein zweites Betätigungselement vorgesehen ist.

8. Fahrzeug, insbesondere Motorrad, nach Anspruch 7, **dadurch gekennzeichnet, dass** das Motorrad einen Lenker mit einem rechten und einem linken Lenkergriff aufweist und dass das erste Betätigungselement (11) im Bereich des einen Lenkergriffs und das zweite Betätigungselement im Bereich des anderen Lenkergriffs angeordnet ist.

9. Fahrzeug, insbesondere Motorrad, nach einem der Ansprüche 7 oder 8, **dadurch gekennzeichnet, dass** das Motorrad ein elektrisches bzw. elektronisches Verbindungselement aufweist, in bzw. an das ein elektrisches bzw. elektronisches Codierelement (12) ein- bzw. ansteckbar ist, wobei durch ein bzw. Anstecken des Codierelements (12) die Anzahl der auswählbaren Fahrmodi um mindestens einen Profimodus erweiterbar ist.

10. Fahrzeug, insbesondere Motorrad, nach Anspruch 9, **dadurch gekennzeichnet, dass** das Verbindungselement im Bereich unterhalb eines Sitzes bzw. einer Sitzbank des Motorrads angeordnet ist.

11. Fahrzeug, insbesondere Motorrad, nach einem der Ansprüche 7 bis 10, **dadurch gekennzeichnet, dass** es sich bei dem ersten Betätigungselement (11) um ein Tasterelement handelt.

12. Fahrzeug, insbesondere Motorrad, nach einem der Ansprüche 7 bis 11, **dadurch gekennzeichnet, dass** es sich bei dem zweiten Betätigungselement (11) um einen von Hand zu betätigenden im Lenkerbereich angeordneten Kupplungshebel handelt.

13. Verfahren nach einem der Ansprüche 1 bis 6, bzw. Fahrzeug nach einem Ansprüche 7 bis 12, **dadurch gekennzeichnet, dass** das Fahrzeug bzw. das Motorrad eine Gruppe mit mindestens zwei elektronisch gesteuerten Systemen (2, 8) aufweist, wobei Einstell- bzw. Betriebsparameter dieser Gruppe von Systemen (2 - 8) durch den momentan Fahrmodus vorgegeben und festgelegt sind.

14. Verfahren bzw. Fahrzeug nach Anspruch 13, **dadurch gekennzeichnet, dass** die Gruppe von Systemen mindestens zwei der folgenden Systeme umfasst
- ein Leistungsbegrenzungssystem (5) zur Begrenzung der Motorleistung eines Antriebsmotors des Fahrzeugs,
- ein die Ansprechcharakteristik beim Gasgeben definierendes System (6),
- ein die Lastschlagdämpfung beim schlagartigen Gasgeben bzw. schlagartigen Gas wegnehmen definierendes System (7),
- ein Antiblockiersystem (2),
- ein Schlupf- bzw. Traktionskontrollsystem (8),
- ein Fahrwerksteuersystem (3).

## Claims

1. A method for changing from a first electronically controlled driving mode of a vehicle, especially a motorcycle, into a second electronically controlled driving mode, comprising the following steps:
- preselecting the second driving mode by actuating a first actuating element (11), and
- switching from the first into the preselected second driving mode by actuating a second actuating element which differs from the first actuating element (11).

2. A method according to Claim 1, **characterised in that** an electronic display unit (14) is switched into a selection menu (15) by actuating the first actuating element (11).

3. A method according to Claim 2, **characterised in that** driving modes present within the selection menu (15) can be preselected cyclically by one or more further actuations of the first actuating element (11).

4. A method according to one of Claims 1 to 3, **characterised in that** switching from a currently active driving mode into a different driving mode takes place only when an idle element is in a non-actuated basic state at the time of actuation of the second actuating element.

5. A method according to one of Claims 1 to 4, **characterised in that** switching from a currently active driving mode into a different driving mode takes place only when the vehicle is not actively being braked via a braking system of the vehicle.

6. A method according to one of Claims 1 to 5, **characterised in that** the number of selectable modes can be extended by at least one professional mode, with an electric or electronic coding element (12) being electrically connected to an electronic interface provided on the vehicle in order to extend the number of selectable modes.

7. A vehicle, especially motorcycle, with an electronic unit which can be switched from a first electronically controlled driving mode into a second electronically controlled driving mode, wherein a first actuating element (11) is provided for preselecting the second driving mode, **characterised in that** a second actuating element is provided for switching the electronic unit from the first driving mode into the second driving mode.

8. A vehicle, especially motorcycle, according to Claim 7, **characterised in that** the motorcycle has a handlebar with a right-hand and a left-hand handlebar grip, and **in that** the first actuating element (11) is arranged in the region of the one handlebar grip and the second actuating element in the region of the other handlebar grip.

9. A vehicle, especially motorcycle, according to one of Claims 7 or 8, **characterised in that** the motorcycle has an electric or electronic connecting element, into or onto which an electric or electronic coding element (12) can be inserted or placed respectively, with the number of selectable driving modes being able to be extended by at least one professional mode by inserting or placing-on the coding element (12).

10. A vehicle, especially motorcycle, according to Claim 9, **characterised in that** the connecting element is arranged in the region beneath a seat or a saddle of the motorcycle.

11. A vehicle, especially motorcycle, according to one of Claims 7 to 10, **characterised in that** the first actuating element (11) is a button element.

12. A vehicle, especially motorcycle, according to one of Claims 7 to 11, **characterised in that** the second actuating element (11) is a manually actuated coupling lever arranged in the handlebar region.

13. A method according to one of Claims 1 to 6, or vehicle according to one of Claims 7 to 12, **characterised in that** the vehicle or the motorcycle has a group with at least two electronically controlled systems (2, 8), with setting or operating parameters of this group of systems (2 - 8) being specified and set by the current driving mode.

14. A method or vehicle according to Claim 13, **characterised in that** the group of systems comprises at least two of the following systems:
- a power limitation system (5) for limiting the engine power of a driving engine of the vehicle,
- a system (6) which defines the response characteristic when accelerating,
- a system (7) which defines the load-reversal damping upon suddenly accelerating or suddenly decelerating,
- an anti-locking system (2),
- a slip or traction control system (8),
- a chassis control system (3).

## Revendications

1. Procédé permettant d'effectuer une commutation entre un premier mode de conduite à commande électronique et un second mode de conduite à commande électronique d'un véhicule, en particulier d'une moto comprenant des étapes consistant à :
- présélectionner le second mode de conduite en actionnant un premier élément d'actionnement (11), et
- effectuer une commutation entre le premier mode de conduite et le second mode de conduite présélectionné par actionnement d'un second élément d'actionnement différent du premier élément d'actionnement (11).

2. Procédé conforme à la revendication 1,
**caractérisé en ce que**
l'actionnement du premier élément d'actionnement (11) permet de brancher une électronique d'affichage (14) dans un menu de sélection (15).

3. Procédé conforme à la revendication 2,
**caractérisé en ce qu'**
un ou plusieurs actionnements ultérieurs du premier élément d'actionnement (11) permet (permettent) de présélectionner cyclique-ment des modes de conduite prévus dans le menu de sélection (15).

4. Procédé conforme à l'une des revendications 1 à 3,
**caractérisé en ce qu'**
une commutation entre un premier mode de conduite momentanément actif et un second mode de conduite n'est effectuée que lorsque, à l'instant de l'actionnement du second élément d'actionnement, un élément de présélection des gaz se trouve dans un état de base non actionné.

5. Procédé conforme à l'une des revendications 1 à 4,
**caractérisé en ce qu'**
une commutation entre un mode de conduite momentanément actif et un autre mode de conduite n'est effectuée que lorsque le véhicule n'est pas freiné de façon active par son système de freinage.

6. Procédé conforme à l'une des revendications 1 à 5,
**caractérisé en ce que**
le nombre de modes pouvant être sélectionnés peut être élargi d'au moins un mode professionnel, pour élargir le nombre de modes pouvant être sélectionnés, un élément de codage (12) électrique ou électronique devant être relié électriquement à une interface électronique prévue sur le véhicule.

7. Véhicule, en particulier moto équipée d'une électronique pouvant être commutée entre un premier mode de conduite à commande électronique et un second mode de conduite à commande électronique, un premier élément d'actionnement (11) étant prévu pour permettre d'effectuer une présélection du second mode de conduite,
**caractérisé en ce que**
pour permettre de commuter l'électronique entre le premier mode de conduite et le second mode de conduite, il est prévu un second élément d'actionnement.

8. Véhicule, en particulier moto conforme à la revendication 7,
**caractérisé en ce qu'**
il comporte un guidon ayant une poignée gauche et une poignée de guidon droite, et le premier élément d'actionnement (11) est monté dans la zone de l'une des poignées tandis que l'autre élément d'actionnement est monté dans la zone de l'autre poignée.

9. Véhicule, en particulier moto conforme à l'une des revendications 7 et 8,
**caractérisé en ce qu'**
il comporte un élément de liaison électrique ou électronique dans ou sur lequel peut être enfiché un élément de codage électrique ou électronique (12), l'enfichage de l'élément de codage (12) permettant d'élargir le nombre de modes de conduite pouvant être sélectionnés d'au moins un mode professionnel.

10. Véhicule, en particulier moto conforme à la revendication 9,
**caractérisé en ce que**
l'élément de liaison est situé dans la zone située au dessous du siège ou de la banquette de la moto.

11. Véhicule, en particulier moto conforme à l'une des revendications 7 à 10,
**caractérisé en ce que**
le premier élément d'actionnement (11) est constitué par un bouton-poussoir.

12. Véhicule, en particulier moto conforme à l'une des revendications 7 à 11,
**caractérisé en ce que**
le second élément d'actionnement (11) est un levier d'accouplement à actionnement manuel situé dans la zone du guidon.

13. Procédé conforme à l'une des revendications 1 à 6 ou véhicule conforme à l'une des revendications 7 à 12,
**caractérisé en ce que**
le véhicule ou la moto comporte un groupe d'au moins deux systèmes (2, 8) à commande électronique, des paramètres de réglage ou de fonctionnement de ce groupe de systèmes (2, 8) étant prédéfinis et déterminés par le mode de conduite momentané.

14. Procédé ou véhicule conforme à la revendication 13,
**caractérisé en ce que**
le groupe de systèmes comprend au moins deux des systèmes suivants :
- un système de limitation de puissance (5) permettant de limiter la puissance du moteur d'entraînement du véhicule,
- un système (6) définissant la caractéristique de réponse lors de l'accélération,
- un système (7) définissant l'amortissement des à-coups de charge lors d'une accélération brusque,
- un système d'antiblocage (2),
- un système de commande du patinage ou de la traction (8),
- un système de commande du mécanisme de roulement (3).
